# EUROPEAN PATENT APPLICATION

(11) **EP 2 117 170 A1**
(43) Date of publication of application: **11.11.2009**
(21) Application number: 08103857.2
(22) Date of filing: 07.05.2008
(51) Int. Cl.: H04L 12/26, H04L 12/56

(54) **Optimizing a transmission path between a mobile terminal and a core network**

(71) Applicant: Nokia Siemens Networks Oy, 02610 Espoo (FI)
(72) Inventor: Bültmann, Daniel, 52070 Aachen (DE); Luo, Jijun, 81549 München (DE); Schulz, Egon, Dr., 80993 München (DE); Walke, Bernhard, 52146 Würselen (DE)
(74) Representative: Bruglachner, Thomas E.

(57) **Abstract**

It is described a method for optimizing a transmission path between a Mobile Terminal (140) and a Core Network (110) of a telecommunication network (100). The method comprises measuring a first Round Trip Time of a data flow along a first transmission path between the Mobile Terminal (140) and a first Point of Attachment (122) being coupled directly to the Core Network (110), measuring a second Round Trip Time of a data flow along a second transmission path between the Mobile Terminal (140) and a second Point of Attachment (124) being coupled directly to the Core Network (110), comparing the first Round Trip Time with the second Round Trip Time, and optimizing the transmission path based on the comparison result. It is further described a computer program for optimizing a transmission path between a Mobile Terminal (140) and a Core Network (100). Furthermore, it is described a Mobile Terminal (140) and a network element (120, 122, 124), which each comprise a data processor being adapted to control the above described transmission path optimizing method.

## Description

### Field of invention

The present invention generally relates to the field of telecommunication networks. In particular, the present invention relates to a method for optimizing a transmission path between a Mobile Terminal and a Core Network of a telecommunication network. Thereby, if appropriate, a handover of the Mobile Terminal between a first Point of Attachment and a second Point of Attachment might be carried out. Further, the present invention relates to a computer program for optimizing a transmission path between a Mobile Terminal and a Core Network. Furthermore, the present invention relates to a Mobile Terminal and to a network element, which each comprise a data processor being adapted to control the above described transmission path optimizing method.

### Art Background

Future mobile radio networks will probably use radio access points connected wirelessly to the backhaul and/or fixed Relay Nodes for the access points in order to satisfy high bandwidth and big coverage demand. In this application a radio access point will also be called a Point of Attachment (PoA). A PoA is for instance a Base Station of a Relay Node.

In particular in areas where no cable backhaul is available or wired connection to the backhaul would be too expensive, wireless backhaul using one ore more Relay Nodes will be a good candidate in order to cater for the backhauling solutions. Techniques for such deployments are Relay Enhanced Cells and mesh networks.

Relay Enhanced Cells are augmented normal cells that use Relay Nodes in order to extend their coverage or increase the available capacity. The topology for such a cell is typically a star topology. US 2007/0197161 A1 describes a cellular wide-area radio communications system with Relay Enhanced Cells.

Mesh Networks on the other hand do not have such a strict topology. These networks feature nodes with wired connection to the backhaul and nodes that must access the backhaul wirelessly by forwarding their data to other nodes that may have access.

Both for Relay Enhanced Cells and for Mesh Networks the communication can involve data transmission across multiple wireless hops with an appropriate mobility support.

Generally, mobile communication systems featuring multi-hop communication comprise a base station and relay nodes that are operated at the same service area. Due to data processing such as segmentation, packetization and error correction, the higher the number of hops that are involved in forwarding the mobile terminals traffic flow the higher is the packet delay for these flows. Attachment to a PoA with a high hop count might be undesirable due to the introduced delay. Furthermore, wireless backhaul hops may be highly loaded and in addition might add additional queuing delay.

One extreme case is that it might be not appropriate to handover a call from a 1-hop connection to a connection with N-hops, wherein N is much larger than one. Using other words, there may be a need for providing a mechanism for controlling a handover properly between connections with different hops taking into account the hop constellation.

### Summary of the Invention

This need may be met by the subject matter according to the independent claims. Advantageous embodiments of the present invention are described by the dependent claims.

According to a first aspect of the invention there is provided a method for optimizing a transmission path between a Mobile Terminal and a Core Network of a telecommunication network. The provided method comprises (a) measuring a first Round Trip Time of a data flow along a first transmission path between the Mobile Terminal and a first Point of Attachment being coupled directly to the Core Network, (b)measuring a second Round Trip Time of a data flow along a second transmission path between the Mobile Terminal and a second Point of Attachment being coupled directly to the Core Network, (c) comparing the first Round Trip Time with the second Round Trip Time, and (d) optimizing the transmission path based on the comparison result.

The described method for optimizing a transmission path is based on the idea that by estimating the delay of data packets for different routes within the telecommunication network there may be provided useful information for improving a handover (HO) control for the Mobile Terminal (MT). In particular, HO decisions may by made, which satisfy the User's respectively the Mobile Terminal's delay requirements. These requirements may be different for different applications being carried out by the MT. In other words, the measurements of different Round Trip Times (RTT's) are taken into account for selecting an appropriate HO target for the MT.

By taking into account different Round Trip Times for data packets to and from the MT an improved mobility management and HO control also in multi-hop telecommunication systems can be established. Thereby, the topology of the telecommunication network, which might change with varying operation conditions, is automatically taken into account for selecting an optimized transmission path between the MT and the Core Network.

A temporal change of the operation condition of the whole telecommunication network may appear for instance if one or more network elements of the telecommunication network exhibit a temporal data overload, such that a congestion of data packets occur. Such a data packet congestion might develop in particular at network elements such as for instance Relay Nodes, which are coupled to another network element such as for instance a base station by means of a radio transmission link.

The MT may be any type of communication end device which is capable of connecting with the telecommunication network by means of a wireless transmission link. In particular the mobile MT may be a cellular mobile phone, a Personal Digital Assistant (PDA), a Notebook computer and/or any other movable communication device.

The first Point of Attachment (PoA) and/or the second PoA may be coupled to the Core Network by means of a wired connection link. In particular the first and/or the second Point of Attachment may be a Base Station. The wired connection link may be realized by means of at least one metal wire and/or by means of at least one optical fiber. In particular the first PoA and/or the second PoA may be a base station.

Depending on the topology of the whole telecommunication network the respective transmission paths may be identified in a different manner. For instance when the telecommunication network exhibits a so called star topology, the respective Round Trip Time (RTT) measurements may be associated with the current Point of Attachment of the MT. When the telecommunication network exhibits a so called mesh topology, the respective RTT measurements may be associated with the detailed route of the data flow between the MT an the current PoA.

It has to be mentioned that also a total RTT between the MT and the Core Network can be measured. However, since (a) the transmission path between the MT and the corresponding PoA is a defined spatial portion of the whole transmission path between the MT and the Core Network and (b) the delay time between the PoA being coupled directly to the Core Network and the Core Network is typically constant and well known, the described first RTT and second RTT are a measure also for the respective total RTT. In other words, when measuring the first and second RTT also the corresponding total RTT's can be precisely calculated without any further measurement procedures.

According to an embodiment of the invention the method further comprises (a) measuring at least one further Round Trip Time of a data flow along at least one further transmission path between the Mobile Terminal and at least one further Point of Attachment being coupled directly to the Core Network, and (b) comparing the at least one further Round Trip Time with the first Round Trip Time and/or with the second Round Trip Time.

This may provide the advantage that the described optimizing procedure can deal with a plurality of different transmission paths. In particular, for a given position of the MT within the telecommunication network, all possible transmission paths might be taken into account, which transmission paths are assigned to a possible candidate PoA serving the MT after a HO has been carried out. This may mean that when carrying out the described optimizing method only once the suitability of a plurality of possible transmission paths can be tested and the optimal transmission path respectively the most appropriate target PoA can selected.

According to a further embodiment of the invention (a) the first transmission path comprises at least one further first Point of Attachment being coupled to the first Point of Attachment by means of a radio transmission link and/or (b) the second transmission path comprises at least one further second Point of Attachment being coupled to the second Point of Attachment by means of a radio transmission link. This may mean that for transmitting a data packet via the first or the second transmission path a plurality of intermediate network elements might be involved in a multi-hop data transmission procedure between the MT and the Core Network. These intermediate network elements may also be denominated Relay Nodes.

It will be easily understood that in case of a multi-hop data transmission via the first, the second and/or possibly further transmission paths the corresponding RTT can be directly related to the number of hops. Thereby, there is in principle no limitation regarding the maximum number of intermediate network elements respectively Relay Nodes being involved in the data transmission. Generally speaking, an indirect coupling between the MT and the corresponding PoA might involve a single hop connection or a multiple hop connection via one or more further Relay Nodes.

According to a further embodiment of the invention (a) the first Point of Attachment and the second Point of Attachment are the same network element or (b) the first Point of Attachment and the second Point of Attachment are different network elements.

Depending on the topology of the whole telecommunication network the first transmission path and the second transmission path can reach the Core Network via the same Point of Attachment. Specifically, this means that the first and the second transmission path have a common section extending between the common PoA and the Core Network. However, when observing the first and the second transmission path from the Core Network the two transmission paths branch off from each other and different Relay Nodes are assigned to the different branches.

Alternatively, the first transmission path and the second transmission path might be spatially separated along their complete lengths. This may mean that the first transmission path and the second transmission path can reach the Core Network via different Point's of Attachment.

According to a further embodiment of the invention the method further comprises (a) forwarding a first measurement value representing the first Round Trip Time from the first Point of Attachment to the Core Network and/or (b) forwarding a second measurement value representing the second Round Trip Time from the second Point of Attachment to the Core Network.

The addressee of the first respectively the second measurement value may be any network element being assigned to the Core Network. In particular, the network element may be a Point of Service (PoS) or a Gateway of the Core Network. The PoS may use this information internally or may make it available to other PoS's by storing it to an Information Server. The Information Server might also be a network element of the Core Network.

The described forwarding of the first respectively the second measurement value may provide the advantage that the measurement results can be made available from the corresponding PoA to any network element of the Core Network.

According to a further embodiment of the invention the method further comprises (a) assigning a first timestamp to the first Round Trip Time and/or (b) assigning a second timestamp to the second Round Trip Time. Thereby, the first timestamp might be indicative for the time of measuring the first RTT. Correspondingly, the second timestamp might be indicative for the time of measuring the second RTT.

The described assignment of time stamps may provide the advantage that old RTT measurement values, which do not any more represent the current situation regarding expected data flow rates via the different transmission paths, can be discarded when estimating a candidate target Point of Attachment for an upcoming HO procedure.

According to a further embodiment of the invention the step of optimizing the transmission path comprises taking into account (a) a first quality information being indicative for the signal quality between the Mobile Terminal and a serving Point of Attachment being assigned to the first transmission path and (b) a second quality information being indicative for the signal quality between the Mobile Terminal and a serving Point of Attachment being assigned to the second transmission path.

Depending on the topology of the telecommunication network and on the current position of the MT within the telecommunication network the serving PoA being assigned to the first transmission path might be the first PoA or a further first PoA, which is connected directly via a single hop connection or indirectly via a multi-hop connection with the first PoA. Correspondingly, the serving PoA being assigned to the second transmission path might be the second PoA or a further second PoA, which may be connected directly or indirectly with the first PoA. Of course, in case one or more further transmission paths are taken into account for the described optimizing procedure, also a further quality information being indicative for the signal quality between the MT and a serving PoA being assigned to the further transmission path can be taken into account.

By taking into account the described quality information a proper control for a HO procedure can be ensured. Thereby, it can be effectively avoided that a new target PoA is selected, which, although if it may be assigned to a transmission path exhibiting a short RTT, provides only a low quality radio connection to the MT.

According to a further embodiment of the invention the first and/or second quality information is a Received Signal Strength and/or a Signal to Interference Noise Ratio. This may provide the advantage the described optimizing method can be further improved with known procedures for HO controlling. Thereby, neither for the MT nor for the serving PoA any additional hardware or hardware modifications are necessary in order to accomplish the described transmission path optimizing method.

Specifically, according to the gathered RTT information and the measured signal quality information such as Received Signal Strength (RSS) and/or Signal to Interference Noise Ratio (SINR) from the currently serving PoA and the candidate PoA, a "Handover decision making module" may select the appropriate target PoA for a planned HO.

According to a further embodiment of the invention the step of optimizing the transmission path comprises performing a handover of the Mobile Terminal from a serving Point of Attachment being assigned to the first transmission path to a serving Point of Attachment being assigned to the second transmission path, if the difference between the second quality information and the first quality information exceeds a threshold value. Thereby, the threshold value depends on the comparison result.

The first quality information may be in particular a first RSS or a first SINR and the second quality information may be in particular a second RSS or a second SINR.

Preferably, when the RTT of a data flow along the second transmission path is larger than the RTT of a data flow along the first transmission path, a comparatively large threshold parameter may be chosen. This can be well understood because an enlargement of the RTT contributes to a deterioration of the radio connection. Therefore, it is wise to increase the threshold value in order to discourage from performing a HO procedure.

Correspondingly, when the RTT of a data flow along the second transmission path is shorter than the RTT of a data flow along the first transmission path, a comparatively small threshold parameter may be chosen. This can be well understood because a reduction of the RTT contributes to an improvement of the radio connection. Therefore, it is wise to decrease the threshold value in order to encourage for performing a HO procedure.

As has already been explained above, a large RTT may be caused by a congestion of the dataflow for instance at a Relay Node, which, when considering an Uplink data transfer, is connected downstream with a further Relay Node or a Base Station by means of a radio transmission link. In that case the Relay Node may represent a bottleneck for the data flow which in the uplink case may be caused by a plurality of Mobile Terminals and in the downlink case may be addressed to a plurality of Mobile Terminals. Further, a large RTT may simply be caused by a multi-hop transmission path comprising a plurality of Relay Nodes. On the other hand, a small RTT may be an indication for a radio transmission comprising a high performance with respect to the corresponding data flow.

In practice, the RTT dependency of the threshold value can be realized if in the active phase of the MT, the telecommunication network indicates to the MT the threshold of the Received Signal Strength (RSS) of the target Base Station respectively the target Relay Node or some other measurement value in order to trigger an optimal HO procedure.

According to a further embodiment of the invention the threshold value further depends on a service, which is currently being utilized by the Mobile Terminal. The service may be any type of service which can be provided by an application server to Mobile Terminals being connected to a mobile telecommunication network. Thereby, some services may require a larger amount data flow whereas other services may require only a small data stream.

The describe dependency of the threshold value from the service being currently used by the User of the MT or the MT itself may provide the advantage that in the course of an HO an unintentional interruption of a service, which requires a large data stream, can be effectively avoided.

According to a further embodiment of the invention the step of optimizing the transmission path comprises a handover decision making process, wherein the handover decision making process is performed by the Mobile Terminal or by the telecommunication network.

In case the telecommunication network performs the HO decision making process preferably the currently serving PoA may make the decision. In that case, the MT has to report the corresponding RTT values and, if appropriate the measured signal quality information to the serving PoA. Of course, sufficient uplink resources have to be reserved by the serving PoA for the MT which is supposed to carry out a handover.

According to a further embodiment of the invention the method further comprises estimating the topology of the telecommunication network based on the measured first Round Trip Time and on the second Round Trip Time. This may provide the advantage that in addition to optimizing a transmission path between the MT and the Core Network information about the topology of the telecommunication network can be acquired without any additional expenses with respect to the overall data load within the telecommunication network. In particular, when the described optimizing procedure is carried out for a plurality of Mobile Terminals within the telecommunication network, the network topology can be recorded very precisely.

In other word, the possibility of estimating the network topology may be a side effect of the described transmission path optimizing method. Thereby, the additional data load on the telecommunication network for establishing a precise image of the network topology may be negligible at least with respect to a usual data load.

According to a further aspect of the invention there is provided a computer program for optimizing a transmission path between a Mobile Terminal and a Core Network of a telecommunication network. The computer program, when being executed by a data processor, is adapted for controlling the above described method for optimizing a transmission path between a Mobile Terminal and a Core Network.

This aspect of the invention is based on the idea that the above described method for optimizing a transmission path between a MT and a Core Network can be implemented on standard Hardware of network elements of telecommunication networks being currently in operation or being planned to be operated in the future. Although the described optimizing methods may provide the biggest advantages in connection with Long Term Evolution (LTE) Networks, it is pointed out the described method may also be applicable for instance for a Universal Mobile Telecommunication System (UMTS) and/or any Global System for Mobile telecommunication (GSM).

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code may be operable to program a computer or other programmable device to carry out the intended functions. The computer program may be available from a network, such as the WorldWideWeb, from which it may be downloaded.

According to a further aspect of the invention there is provided a Mobile Terminal comprising a data processor, which is adapted for performing the above described transmission path optimizing method.

This aspect of the invention is based on the idea that the above described transmission path optimizing method may be controlled by the data processor of a Mobile Terminal. Of course, when carrying out the optimizing method described above, also other network elements of the telecommunication network and in particular a PoS might interact with the MT for effectively performing the transmission path optimizing method.

According to a further aspect of the invention there is provided a network element, in particular a Point of Attachment, of a telecommunication network. The provided network element comprises a data processor, which is adapted for performing the above described transmission path optimizing method.

This aspect of the invention is based on the idea that the above described transmission path optimizing method may be controlled by the data processor of a network element. Of course, when carrying out the optimizing method described above, also other network elements of the telecommunication network and in particular a MT being connected to the telecommunication network might interact with the described network element for effectively performing the transmission path optimizing method.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a telecommunication network comprising Relay Enhanced Cells.
Figure 2 shows a diagram illustrating a Handover threshold adaptation based on Round Trip Time measurements and the operation of a Handover decision making module.
Figure 3 shows different threshold levels to be used for a Handover of a Mobile Terminal from a source Point of Attachment to a target Point of Attachment.
Figure 4 shows a flowchart illustrating a Handover procedure taking into account Round Trip Time measurements.

### Detailed Description

The illustration in the drawing is schematically. It is noted that in different figures, similar or identical elements are provided with the same reference signs or with reference signs, which are different from the corresponding reference signs only within the first digit.

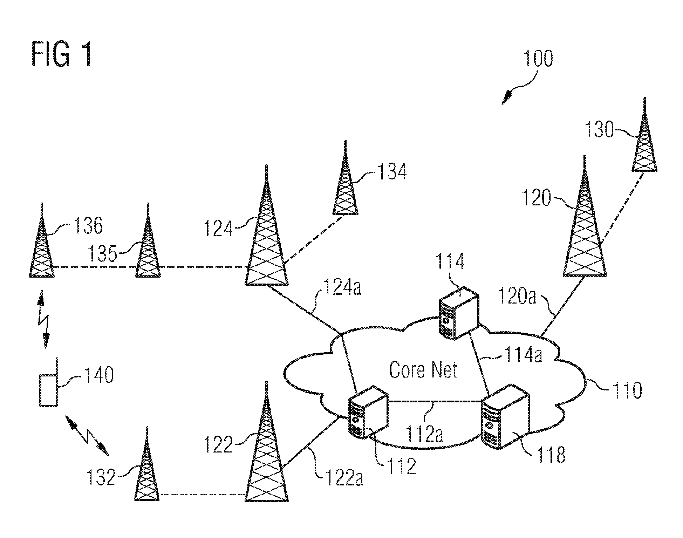

Figure 1 shows a telecommunication network 100. The telecommunication network 100 comprises a Core Network 110. The Core Network 110 itself comprises a plurality of network elements. In Figure 1 a first Point of Service (Pos) 112, a second PoS 114 and an Information Server 118 are depicted as exemplary network element being assigned to the Core Network 110. According to the embodiment described here the first PoS 112, the second PoS 114 and the Information Server 118 are interconnected by means of a wired connection 112a and 114a. The first PoS 112 and/or the second PoS 114 can also be Gateways of the Core Network 110.

At this point it is mentioned that it is not necessary that the Information Server 118 represents a self-contained entity. For instance the functionality of the Information Server 118 and one or more Pos 112, 114 can be combined within one network element. Further, it is not necessary that the Information Server 118 is assigned to the Core Network 110. The functionality of the Information Server can also be located outside the Core Network 110. In this context it is also not necessary that the Information Server functionality is provided by a single network element such as a Base Station, the functionality of the Information Server can also be distributed over several different network elements inside and/or outside of the Core Network 110.

At this point it is further mentioned that both the deployment of a dedicated Information Server 118 and dedicated Points of Service 112, 114 is optional for the described transmission path optimizing method. The Information Server 118 could also be realized as a distributed data service. PoS in a certain area could form a data pool and exchange measurement information between each other. The same is true if there would be no dedicated PoS, which concentrates a set of Points of Attachment. Points of Attachment within a given area then need to be pooled and take over responsibility for data exchange and handover (HO) decisions in a distributed manner. This might be the case in particular in a Long Term Evolution (LTE) architecture.

The telecommunication network 100 further comprises three Points of Attachment, a first Point of Attachment (PoS) 120, a second PoS 122 and a third PoS 124, which are each directly connected to the Core Network 110 by means of a wired transmission link. The first Pos 120 is coupled to the Core Network 110 via a wired connection link 120a, the second Pos 122 is coupled to the Core Network 110 via a wired connection link 122a and the third Pos 124 is coupled to the Core Network 110 via a wired connection link 124a. Due to the direct connection to the Core Network 110 the PoS 120, 122 and 124 represent Base Stations.

The telecommunication network 100 further comprises five Points of Attachment 130, 132, 134, 135 and 136, which are respectively attached to one of the Base Stations 120, 122 or 124. This means that the Points of Attachment 130, 132, 134, 135 and 136 are not directly connected to the Core Network 110. Therefore, the Points of Attachment 130, 132, 134, 135 and 136 represent Relay Nodes. According to the embodiment described here the Relay Nodes 130, 132, 134, 135 and 136 are connected to the respective Base Station 120, 122 or 124 by means of wireless transmission links. In Figure 1 these transmission links are depicted with dashed lines. The Relay Nodes 130, 132, 134, 135 and 136 provide the advantage that without deploying further Base Stations the overall data transmission bandwidth within the telecommunication network 100 and the spatial coverage of the telecommunication network 100 may be increased.

It has to be mentioned that in the depicted Relay Enhanced Cell scenario each of the Base Stations 120, 122 and 124 and each of the Relay Nodes 130, 132, 134, 135 and 136 may be the target PoA of a handover (HO) of a Mobile Terminal (MT) 140. According to the embodiment described here the MT is a cellular phone 140.

Figure 1 shows the telecommunication network 100 in an operating condition, wherein the MT is presently served by the Relay Node 132. However, the Relay Node 136 represents a candidate target PoA for a HO. According to the embodiment described here the MT 140 is connected to the Core Network 110 by means of a three hop communication link which involves the Relay Node 132 and the Base Station 122. By contrast thereto, after the mentioned HO the MT 140 would be connected to the Core Network 110 by means of a four hop communication link utilizing the Relay Node 136, the Relay Node 135 and the Base Station 124.

It can be easily understood that a multi hop communication with four hops will probably exhibit more delays for the data flow between the MT 140 and the Core Network 110 than a multi hop communication with only three hops. Therefore, supposed the Relay Node 132 and the Relay Node 135 both provide for a similar signal quality for the MT 140, the preferred PoA is the Relay Node 132 which allows for a shorter multi hop connection to the Core Network 110.

Depending on the network architecture, a mobility management for the MT 140 can be differently realized. For instance, a mobility management can be allocated to different PoS nodes. One PoS may be responsible for multiple Points of Attachment. In an Long Term Evolution (LTE) architecture this responsible PoS can be mapped to an Mobility Management Entity. Alternatively, the mobility management can be distributed among different Base Stations without a direct involvement of the Points of Service.

In order to estimate the a delay distribution for different routes to the Core Net 110, according to the embodiment described here, the PoS 112 and the PoS 114 are supported by the Information Server 118. The Information Server 118 may provide a common data pool among different Points of Service in order to host the variances of different data flow delays for the active MT. Physically the PoS functions can be mapped into PoS or even to the BS. The mapping of the logical functions makes the realization of the described method for optimizing the transmission path between the MT 140 and the Core Network 110 straightforward.

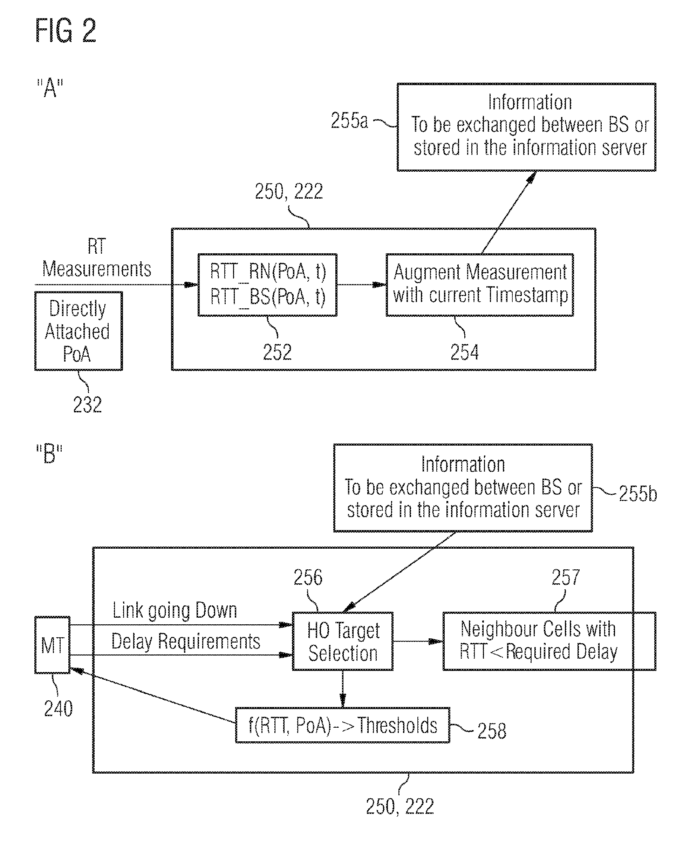

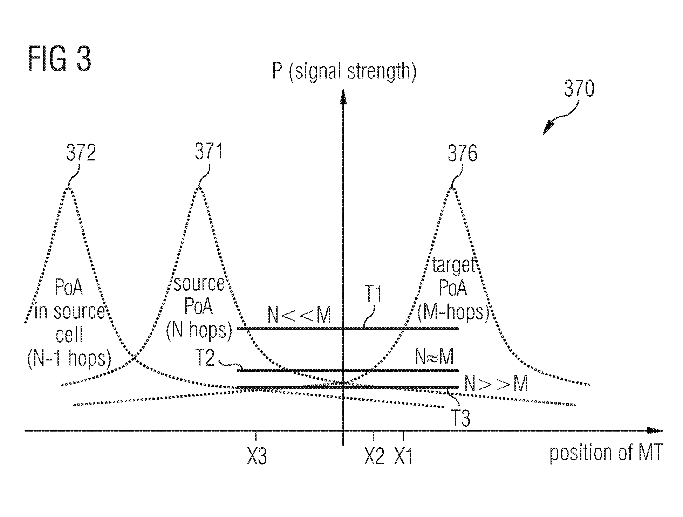

In the following a method for controlling an HO of a MT from a source PoA to a destination respectively a target PoA will be described in more detail with reference to Figure 2 and Figure 3. The described method uses an Adaptation of HO Thresholds for Relay Enhanced Cells by monitoring Round Trip Times of data flows along different radio transmission paths. Thereby, the monitored Round Trip Times are taken into account for the HO control.

The basic idea of this HO controlling method is that Points of Attachment, which are directly connected to the Core Network, estimate the current data transmission delay on a given route by measuring the corresponding Round Trip Time (RTT) of the data flows of the MT. According to the gathered RTT information and preferably also according to a measured signal quality information, a HO decision making module 250 appropriately selects the target PoA. The signal quality information may be for instance a Received Signal Strength (RSS) and/or a Signal to Interference Noise Ratio (SINR) between (a) the MT and the source PoA and (b) the MT and the candidate PoA.

As can be seen from the upper part of Figure 2 labeled with "A", the HO decision making module 250 acquires RTT measurements values 252. According to the embodiment described here the functionality of the module 250 is assigned to a Base Station 222 of the telecommunication network 100. The RTT measurement values 252 are acquired from a Relay Node 232, which is directly connected to the Base Station 222. The RTT measurement values 252 may comprise a sequence of delay times for each hop within the transmission path between the MT 140 and the Core Network 110, which transmission path comprises the PoA 132 and the PoA 122. The delay time between the MT 140 and the Relay Node 132, 232 is abbreviated with RTT_RN(PoA, t). The delay time between the Relay Node 132, 232 and the Base Station 122, 222 is abbreviated with RTT_BS(PoA, t).

It can be easily understood that if the number of hops is larger more sectional delay times are acquired by the HO decision making module 250 of the Base Station 222. After acquiring the RTT measurement values 250, a timestamp is assigned to each measurement value. This is indicated in Figure 2 with the reference numeral 254. The timestamp can be used in order to implement an ageing of measurements values such that they can be deleted if they are too old. The RTT measurement values 250 are forwarded by the Base Station 222 to its PoS (not depicted). This is indicated in Figure 2 with the reference numeral 255a. The PoS, which may use the measurement values 250 internally or make it available to other Points of Service by storing it for instance to the Information Server 118 depicted in Figure 1.

As can be seen from the lower part of Figure 2 labeled with "B", the HO decision Module 250 receives a plurality of collected RTT measurement values acquired by different Base Stations 122, 124 each comprising a time stamp representing the corresponding measurement time from its PoS. This is indicated in Figure 2 with reference numeral 255b. According to the embodiment described here, the collected RTT measurement values are stored in a HO target selection unit 256.

Further, a MT 240 being currently served by the Base Station 222 respectively by a Relay Node, which is directly or indirectly connected to the Base Station 222 without using the Core Network, reports its delay requirements to the HO target selection unit 256. In particular a value for a maximum delay can be set by a MT and is reported by the MT 240 to the HO target selection unit 256. Thereby, the maximum delay value may depend on a service which may currently be provided by an application server to the MT 240.

According to the embodiment described here the HO target selection unit 256 discards all Base Stations respectively all data packet transmission paths, which after a corresponding HO would result in a delay time for data packets transmitted between the MT and the Core Network, which delay time is larger than a maximum delay reported before by the MT 240.

Subsequently, HO thresholds for the ratio between a signal strength of a potential candidate target PoA and the PoA, which is currently serving the MT 240, are calculated for each candidate PoA respectively for each candidate transmission path between the MT 240 and the Core Network by means of a threshold calculation unit 258. As will be described below in more detail, these HO thresholds depend on the ratio between the RTT for data packets being transmitted via the currently serving PoA and the RTT for data packets being transmitted via all potential candidate PoA serving the MT 240.

The threshold calculation unit 258 reports the corresponding threshold values to the MT 240. When scanning the signal strength of potential candidate PoA, the MT 240 takes into account the non-uniform threshold value. According to the embodiment described here the MT will select a target PoA for a planned HO by taking into account both the signal strength and the threshold value of the candidate target PoA.

In other words, in the active phase of the MT 240, the network indicates to the MT the threshold of the Received Signal Strength (RSS) of the target Base Station respectively the target Relay Node in order to trigger an optimal HO.

Figure 3 illustrates the adaptation of the HO threshold value as a function of the measured RTT for each corresponding PoA which may serve the MT after a successful HO. In this respect it is pointed out that the RTT typically corresponds to the number of hops along a predefined data transmission path between the MT and Base Station being directly connected to the Core Network by means of a wired transmission link. Therefore, in the following the RTT and the number of hops of a multi hop transmission are considered to be equivalent. This means that when reference is made to the number of hops, also the corresponding RTT can be meant.

Figure 3 shows a diagram 370 depicting the signal strengths of various Relay Nodes as a function of the position of a MT. A first signal strength 371 is caused by a first Relay Node being represented by the PoA which is currently serving the MT. A second signal strength 372 is caused by and a second Relay Node. The first and the second relay node are both assigned to a first Base Station. The signal strength of the first Base Station exhibits the same or at least a similar spatial shape as the curves 371 and 372. However, the signal strength of the first Base Station cannot be seen in Figure 3 because the extension of the MT position axis towards the left side of Figure 3 is limited. As is indicated in Figure 3, the first Relay Node is connected to the first Base Station by means of an N hop data connection. The second Relay Node is connected to the first Base Station by means of an (N-1) hop data connection.

A signal strength 376 is caused by a Relay Node being a candidate PoA for serving the MT after a forthcoming HO. This Relay Node is assigned to a second Base Station. The signal strength of the second Base Station exhibits the same or at least a similar shape as the curves 371, 372 and 376. However, the signal strength of the second Base Station cannot be seen in Figure 3 because the extension of the MT position axis towards the right side of Figure 3 is limited. As is indicated in Figure 3, the Relay Node providing the signal strength 376 is connected to the second Base Station by means of an M hop data connection.

Depending on the ratio between the number of hops of the source within the source transmission path and the number of hops within the potential destination transmission path different thresholds are applied. These thresholds are used for triggering the corresponding HO when the MT travels along the positive abscissa of the diagram 370 and the signal strength 371 falls below or the signal strength 376 exceeds the corresponding threshold.

In the following "N" is used for the number of hops within the current data transmission path, which connects the MT with the Core Network. "M" is used for the number of hops within the target transmission path, which connects the MT with the Core Network after a HO from (a) the Relay Node providing the signal strength 371 to (b) the Relay Node providing the signal strength 376.
a) According to the embodiment described here, when the MT travels along the abscissa and N « M, a first threshold T1 is used for triggering the above described HO. The first trigger will be activated when the MT crossed the position X1.
b) When N ≅ M, a second threshold T2 is used for triggering the HO. As can be seen from Figure 3, the second trigger will be activated when the MT crossed the position X2.
c) When N » M, a third threshold T3 is used for triggering the HO. As can be seen from Figure 3, the third trigger will be activated when the MT crossed already the position X3.

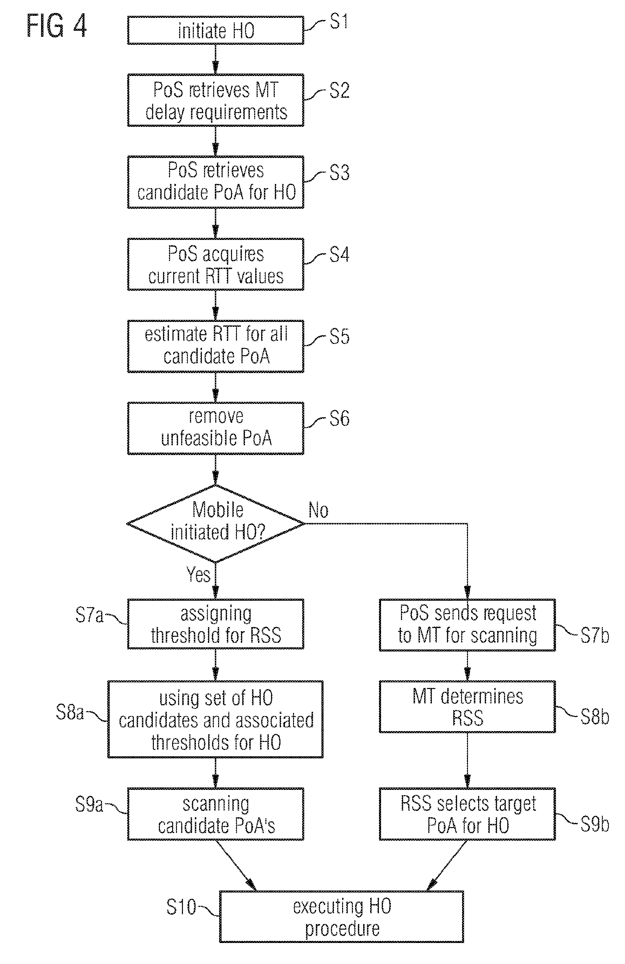

Figure 4 shows a flowchart illustrating an exemplary Handover procedure taking into account Round Trip Time Delay measurements.

In a first step S1, the MT reports a degradation of the quality of the current radio transmission link to its PoS. Thereby, the forthcoming HO procedure is initiated.

Next, in a second step S2, the PoS retrieves the delay requirements of the MT from its internal storage. This means that a PoS is involved in the flow setup. Alternatively the MT could report its delay requirement with a link quality degradation report.

Next, in a third step S3, the PoS retrieves a HO candidate set for the current PoA of the MT. The HO candidate set may be retrieved from an internal storage of the PoS. The HO candidate set may comprise a static list, which has been determined during the deployment of the telecommunication network. The static list may simply represent geographic neighbor information about all PoA of the telecommunication network.

Next, in a fourth step S4, the PoS consults the Information Server on the current delay characteristics respectively the RTT measurement values for all candidate Points of Attachment retrieved in S3.

Next, in a fifth step S5, the Information Server retrieves an estimate for the current delay characteristics respectively for the current RTT measurement values if the MT would be attached to the candidate PoA. This estimation is made for all Points of Attachment.

Next, in a sixth step S6, the PoS removes these Points of Attachment from the candidate set that do not meet the delay requirements specified by the MT.

The actions performed within the following steps depends whether the HO should be in initiated by the MT (1st alternative A) or whether HO should be in initiated by the telecommunication network (2nd alternative B).

### A:

First the steps which have to be performed in connection with a MT initiated HO are described. In Figure 4 these steps are denominated S7a, S8a and S9a.

In the seventh step S7a the PoS assigns a threshold for the Received Signal Strength (RSS) or a similar measurement for each of the remaining candidate Points of Attachment. The threshold may be lowered to encourage a HO to a target PoA (e.g. load balancing encourages a specific PoA) or may be increased to discourage a HO (e.g. congestion on a feeder link for a Relay Node PoA). The PoS may sort the candidate set of Points of Attachment to influence the HO execution.

Next, in the eighth step S8a, the set of handover candidate Points of Attachment associated thresholds is then used for the forthcoming HO execution.

Next, in the ninth step S9a, the MT scans each of the candidate Points of Attachment starting with the first entry of the sorted candidate list. The corresponding RSS value is compared to the threshold of the particular PoA. The first PoA which threshold is crossed is selected as the target PoA for the handover.

Next, in a tenth step S10, the MT, the currently serving source PoA, the selected target PoA and the PoS execute the system specific HO procedure.

### B:

Second the steps which have to be performed in connection with a network initiated HO are described. In Figure 4 these steps are denominated S7b, S8b and S9b.

In the seventh step S7b, the PoS sends a request to scan the remaining PoA candidates to the mobile terminal. Thereby, the signal strength between the MT and the respective PoA is measured for each candidate PoA.

Next, in the eighth step S8b, the MT determines the RSS or a similar measurement value for each of the PoA candidates in the requests. The corresponding results are sent back to the PoS.

Next, in the ninth step S9b, upon reception of the measurement report the PoS selects a HO target PoS, which may be based (a) on the delay requirement of the MT, (b) on the RTT estimation for the destination link and/or (c) on any other measure relevant to an efficient radio resource management.

Next, the tenth step S10, which is same for both alternatives, is carried out. As has already been described above, in step S10 the MT, the currently serving source PoA, the selected target PoA and the PoS execute the system specific HO procedure.

By using the RTT measurements as additional input to HO controlling algorithms the following improvements and advantages may be realized:
(a) Continuously monitoring the RTT in a multi-hop network may allow for an estimation of the network topology even if the topology is changing.
(b) RTT may be used as a performance indicator which is important to user experience. This holds in particular when delay sensitive applications are used.
(c) Since congested feeder links will also produce higher RTT, the HO controlling procedure described in this application may result in an automatic load balancing.
(d) A continuous Quality of Service may be provided without big jitters.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 100: telecommunication network
- 110: Core Network
- 112: Point of Service / Gateway
- 112a: wired connection link
- 114: Point of Service / Gateway
- 114a: wired connection link
- 118: Information Server
- 120: Point of Attachment / Base Station
- 120a: wired connection link
- 122: Point of Attachment / Base Station
- 122a: wired connection link
- 124: Point of Attachment / Base Station
- 124a: wired connection link
- 130: Point of Attachment / Relay Node
- 132: Point of Attachment / Relay Node
- 134,135, 136: Point of Attachment / Relay Node
- 140: Mobile Terminal / cellular phone

- 222: Point of Attachment / Base Station
- 232: Point of Attachment / Relay Node
- 240: Mobile Terminal / cellular phone
- 250: Handover decision making module
- 252: RTT measurement values
- 254: Augment RTT measurement value with timestamp
- 255a: exchange RTT information
- 255b: exchange RTT information
- 256: Handover target selection unit
- 257: discarding of candidate target Points of Attachment
- 258: Threshold calculation unit

- 370: diagram
- 371: signal strength (source Point of Attachment)
- 372: signal strength (Point of Attachment in source cell)
- 376: signal strength (target Point of Attachment)
- T1: first threshold
- T2: second threshold
- T3: third threshold

- S1: first step
- S2: second step
- S3: third step
- S4: fourth step
- S5: fifth step
- S6: sixth step
- S7a: seventh step, 1st alternative
- S7b: seventh step, 2nd alternative
- S8a: eighth step, 1st alternative
- S8b: eighth step, 2nd alternative
- S9a: ninth step, 1st alternative
- S9b: ninth step, 2nd alternative
- S10: tenth step (for both alternatives)

## Claims

1. Method for optimizing a transmission path between a Mobile Terminal (140, 260) and a Core Network (110) of a telecommunication network (100), the method comprising
• measuring a first Round Trip Time of a data flow along a first transmission path between the Mobile Terminal (140, 240) and a first Point of Attachment (122) being coupled directly to the Core Network (110),
• measuring a second Round Trip Time of a data flow along a second transmission path between the Mobile Terminal (140, 240) and a second Point of Attachment (124) being coupled directly to the Core Network (110),
• comparing the first Round Trip Time with the second Round Trip Time, and
• optimizing the transmission path based on the comparison result.

2. The method as set forth in the preceding claim, further comprising
• measuring at least one further Round Trip Time of a data flow along at least one further transmission path between the Mobile Terminal (140, 240) and at least one further Point of Attachment (120) being coupled directly to the Core Network (110), and
• comparing the at least one further Round Trip Time with the first Round Trip Time and/or with the second Round Trip Time.

3. The method as set forth in one of the preceding claims, wherein
- the first transmission path comprises at least one further first Point of Attachment (132) being coupled to the first Point of Attachment (122) by means of a radio transmission link and/or
- the second transmission path comprises at least one further second Point of Attachment (134, 135, 136) being coupled to the second Point of Attachment (124) by means of a radio transmission link.

4. The method as set forth in one of the preceding claims, wherein
the first Point of Attachment and the second Point of Attachment are the same network element (124) or
the first Point of Attachment (122) and the second Point of Attachment (124) are different network elements.

5. The method as set forth in one of the preceding claims, further comprising
• forwarding a first measurement value representing the first Round Trip Time from the first Point of Attachment (122) to the Core Network (110) and/or
• forwarding a second measurement value representing the second Round Trip Time from the second Point of Attachment (124) to the Core Network (110).

6. The method as set forth in one of the preceding claims, further comprising
• assigning a first timestamp (254) to the first Round Trip Time and/or
• assigning a second timestamp (254) to the second Round Trip Time.

7. The method as set forth in one of the preceding claims, wherein optimizing the transmission path comprises taking into account
- a first quality information being indicative for the signal quality between the Mobile Terminal (140, 240) and a serving Point of Attachment (132) being assigned to the first transmission path and
- a second quality information being indicative for the signal quality between the Mobile Terminal (140, 240) and a serving Point of Attachment (136) being assigned to the second transmission path.

8. The method as set forth in claim 7, wherein the first and/or second quality information is a Received Signal Strength and/or a Signal to Interference Noise Ratio.

9. The method as set forth in one of the claims 7 and 8, wherein optimizing the transmission path comprises
performing a handover of the Mobile Terminal (140, 240) from a serving Point of Attachment (132) being assigned to the first transmission path to a serving Point of Attachment (136) being assigned to the second transmission path, if the difference between the second quality information and the first quality information exceeds a threshold value (T1, T2, T3),
wherein
the threshold value (T1, T2, T3) depends on the comparison result.

10. The method as set forth in claim 9, wherein
the threshold value (T1, T2, T3) further depends on a service, which is currently being utilized by the Mobile Terminal (140, 240).

11. The method as set forth in one of the preceding claims, wherein optimizing the transmission path comprises a handover decision making process, wherein
the handover decision making process is performed by the Mobile Terminal (140, 240) or by the telecommunication network (100).

12. The method as set forth in one of the preceding claims, further comprising
• estimating the topology of the telecommunication network (100) based on the measured first Round Trip Time and on the second Round Trip Time.

13. A computer program for optimizing a transmission path between a Mobile Terminal (140, 240) and a Core Network (110) of a telecommunication network (100), the computer program, when being executed by a data processor, is adapted for controlling the method as set forth in any one of the claims 1 to 12.

14. A Mobile Terminal comprising
• a data processor, which is adapted for performing the method as set forth in any one of the claims 1 to 12.

15. A network element, in particular a Point of Attachment (120, 122, 124), of a telecommunication network (100), the network element comprising
• a data processor, which is adapted for performing the method as set forth in any one of the claims 1 to 12.
